# EUROPEAN PATENT APPLICATION

(11) **EP 4 624 689 A1**
(43) Date of publication of application: **01.10.2025**
(21) Application number: 25165841.5
(22) Date of filing: 25.03.2025
(51) Int. Cl.: E03F 5/04, F16B 37/08

(54) **HEIGHT ADJUSTMENT DEVICE AND DRAIN ASSEMBLY**

(30) Priority: 27.03.2024 EP 24166935
(71) Applicant: Easy Sanitary Solutions B.V., 7575 BK Oldenzaal (NL)
(72) Inventor: ten Voorde, Gijs, 7622 BX Borne (NL); Heiner, Jorrit, 7511 DL Enschede (NL)
(74) Representative: Patentanwälte Ruff, Wilhelm, Beier, Dauster & Partner mbB

(57) **Abstract**

2.1. The invention relates to a height adjustment device and to a drain assembly height adjustment device equipped therewith. The height adjustment device comprises a support part (1) having a support surface (2), and a foot part (3) having at least one foot element (4₁). The support surface is height adjustably connected with the foot element via a screw thread connection (5) comprising an outer thread (6) formed on the foot element and an inner thread (7) formed on an associated screw sleeve (8₁) of the support part.

2.2. According to the invention the screw sleeve is configured to be laterally movable with its inner thread relative to the outer thread of the foot element between a thread closing position and a thread opening position. The support part comprises a thread actuating mechanism (10) which is configured to elastically hold the screw sleeve in its thread closing position and to be user-operable for moving the screw sleeve from its thread closing position to its thread opening position.

2.3. Use, e.g., for shower drain assemblies.

## Description

The invention relates to a height adjustment device according to the preamble of claim 1 and to a drain assembly equipped therewith, preferably a shower drain assembly, such as used in a floor of a shower room or the like to discharge shower water.

The height adjustment device comprises a support part having a support surface, and a foot part having at least one foot element. The support surface is height adjustably connected with the foot element via a screw thread connection which comprises an outer thread formed on the foot element and an inner thread formed on an associated screw sleeve of the support part. The screw thread connection allows a quite precise, in particular stepless height adjustment, where the accuracy of the adjustment can be set by a proper choice of the thread pitch depending on the case at hand. A lower thread pitch allows for finer height adjustment, but more screw thread rotation is then needed to result in a given height change. According to the needs a single foot element or a plurality of foot elements may be used. The screw sleeve may be formed integrally, i.e. in one single piece, with the support part or may be formed separately and mounted on the support part. The screw sleeve receives at least a portion of the outer thread of the foot element and is provided with the cooperating inner thread either on its complete inner sleeve surface or on a portion of its inner sleeve surface only.

Height adjustment should be understood herein in a broad sense to mean an adjustment in any direction called height direction, where the height direction may in particular be a direction pointing mainly vertically upwards or a direction pointing mainly vertically downwards, i.e. a depth direction.

The height adjustment device can in particular be used for height adjustment of a drain assembly, such as a shower drain assembly intended to be incorporated in a floor of a shower room, but can also be used for variably setting the height position of any other object in relation to a given base surface by mounting the object to the support surface or forming the object integrally, i.e. in one single piece, with the support part and arranging this ensemble with the foot part of the height adjustment device on the base surface. In the shower drain appliance the height adjustment device allows to have the drain arranged in the floor at a desired height, for example such that the top surface of the drain is substantially flush with the top surface of the surrounding floor surface and/or the drain, in particular when having an elongated shape, is arranged with a slope in its longitudinal direction to facilitate discharge of collected shower water. This typically can be used to adjust the drain to a desired level so that a slope can be taken into account in regard to the surrounding floor around the shower area.

Height adjustment devices of the type mentioned at the outset, and drain assemblies equipped therewith as well as height adjustment devices in particular in use to adjust the height of drains and other sanitary installations are disclosed, e.g., in laid-open publication EP 2 617 908 A1, utility model publication DE 20 2009 009 117 U1, and patent publication US 4,067,072.

It is the technical problem underlying the invention to provide a height adjustment device of the type mentioned at the outset which offers advantages over the prior art assemblies mentioned above as regards in particular relative low manufacturing cost and easy installation handling as well as high functional reliability, e.g., when used to install a shower drain in a floor of a shower room. It is also the technical problem underlying the invention to provide a drain assembly equipped with such height adjustment device.

The invention solves this problem by providing a height adjustment device having the features of claim 1 and a drain assembly having the features of claim 10. Advantageous developments of the invention are specified in the dependent claims, the wording of which is hereby made part of the description by reference. This in particular includes all embodiments of the invention that result from the combinations of features which are covered by the dependencies of the dependent claims.

In the height adjustment device according to the invention the screw sleeve is configured to be laterally movable with its inner thread relative to the outer thread of the foot element between a thread closing position and a thread opening position. The support part comprises a thread actuating mechanism which is configured to elastically hold the screw sleeve in its thread closing position and to be user-operable for moving the screw sleeve from its thread closing position to its thread opening position, preferably in a way that is comfortable for the user. In a corresponding embodiment related to height adjustment of a shower drain, the user can grab the shower drain by its sides and reach the actuating mechanism with his fingers.

Here, the thread closing position means that in this position of the screw sleeve the inner thread of the screw sleeve is in threading engagement with the outer thread of the foot element. Consequently, in this thread closing position of the screw sleeve height adjustment can be accomplished by threadably turning, i.e. threadably rotating, the foot element with its outer thread relative to the screw sleeve with its inner thread. In this case the thread pitch and the thread turning angle determine the resulting change of height.

On the other hand, the thread opening position means that in this position of the screw sleeve the inner thread of the screw sleeve is out of threading engagement with the outer thread of the foot element. Consequently, in this thread opening position of the screw sleeve height adjustment can not be accomplished by threadably turning the foot element with its outer thread relative to the screw sleeve with its inner thread, but can instead be accomplished by simply translationally moving the foot element relative to the screw sleeve in longitudinal direction of the screw sleeve, where the longitudinal direction of the screw sleeve is also the longitudinal direction of the screw thread connection, i.e. the thread longitudinal axis of the inner thread of the screw sleeve and the outer thread of the foot element, and is thus the direction of the height to be adjusted. Due to being out of threading engagement the outer thread of the foot element can in this case simply pass the inner thread of the screw sleeve during the translational longitudinal movement of the foot element relative to the screw sleeve.

The term lateral in connection with the relative movement of the screw sleeve and parts thereof as well as related other device components is thus used herein to mean a movement having a main directional component orthogonal to the axial, i.e. longitudinal, direction of the screw thread connection, i.e. the direction of the thread longitudinal axis of the cooperating inner and outer threads of the screw sleeve and the foot element, respectively.

It goes without saying that any relative movement of two parts as mentioned herein should be understood in its broad sense to include the possibilities of moving only the one or the other of the parts or both parts relative to one another.

In combination, the height adjustment device according to the invention advantageously provides for a coarse height adjustment by putting the screw sleeve to its thread opening position and translationally moving the foot element relative to the screw sleeve in said longitudinal direction, i.e. the adjusted height direction, as well as for a fine height adjustment by putting the screw sleeve to its thread closing position and threadably turning the foot element relative to the screw sleeve.

The thread actuating mechanism elastically holds the screw sleeve in its thread closing position. This defines the thread closing position as an initial, stable position to which the screw sleeve is biased by the elastic force of the thread actuating mechanism. In this initial position of the screw sleeve the screw connection is in its active state with the outer thread of the foot element being in threading engagement with the inner thread of the screw sleeve so that height adjustment can be accomplished by rotating the foot element relative to the screw sleeve. The user can operate, i.e. manipulate, the thread actuating mechanism to move the screw sleeve from its thread closing position to its thread opening position, i.e. to bring the screw sleeve out of its initial, stable thread closing position to its thread opening position so as to allow for translational height adjusting movement of the foot part relative to the support part. Due to the elastic restoring force of the thread actuating mechanism the thread opening position of the screw sleeve can favourable be implemented as a temporary position from which the screw sleeve automatically returns to its thread closing position once the user releases his operation of the thread actuating mechanism.

So, the height adjustment device of the invention provides easy installation handling and high functional reliability in that height adjustment of an object can be accomplished in a quick and exact manner by combining the coarse and fine adjustment possibilities with correspondingly setting the screw sleeve in its screw opening and closing positions, respectively. The height adjustment device of the invention can be manufactured and operated with comparatively low effort and cost as a fairly simple device easy to be fabricated and manipulated. The device is in particular suited for use in drain systems to provide height adjustment of a drain, such as a shower drain.

In a development of the invention the screw sleeve is formed by at least a first and a second screw sleeve portion separated by one or more axial gaps and arranged to be laterally movable relative to one another between the thread closing position and the thread opening position of the screw sleeve. This constitution of the screw sleeve allows for easy and secure provision of the thread opening position of the screw sleeve by a corresponding lateral relative movement of its screw sleeve portions. For example, one of the screw sleeve portions may remain stationary while the other one may be actively laterally moved by the user via the thread actuating mechanism to bring the screw sleeve in its thread opening position and thus the cooperating threads of the screw thread connection out of engagement. Dividing the screw sleeve into the first and second screw sleeve portions is sufficient to provide this function, while depending on the case at hand the sleeve may be divided in more than two screw sleeve portions of which at least one is laterally movable relative to at least one other screw sleeve portion. The screw sleeve portions may be formed as connected parts, i.e. by corresponding parts of a one-piece screw sleeve component, or may be formed as separate screw sleeve parts, i.e. by corresponding separate screw sleeve portion components which are arranged so that they together form the screw sleeve.

In a development of the invention the screw sleeve is formed with an inner diameter larger than an outer diameter of the outer thread of the foot element. This represents another favorable possibility for establishing the thread opening position of the screw sleeve. By forming the screw sleeve with its inner diameter larger than the outer diameter of the outer thread of the foot element the screw sleeve can be laterally moved to a position where the engagement of the outer thread of the foot element with the inner thread of the screw sleeve is released, which represents the thread opening position of the screw sleeve. In the thread closing position the outer thread of the foot element engages with the inner thread of the screw sleeve along a part of its circumference which is sufficient to provide for the intended threading rotational movement of the foot element relative to the screw sleeve, for example along one fourth to one half of the complete 360° circumference.

In an alternative development of the invention the screw sleeve is formed elastically with an inner diameter slightly smaller than an outer diameter of the outer thread of the foot element such that the screw can be widened elastically with its inner diameter when axially inserting the outer thread of the foot element. This can provide an elastic radial force on the thread engagement of the outer thread of the foot element with the inner thread of the screw sleeve.

In a development of the invention the thread actuating mechanism is configured to be one-hand user finger-operable for moving the screw sleeve from its thread closing position to its thread opening position. This configuration of the thread actuating mechanism is advantageous in that it allows the user to operate the thread actuating mechanism by using just one or more fingers of one hand. The user in this case has its other hand free for other handling measures, in particular for accomplishing the height adjustment by operating the foot element and thus the foot part by translationally moving it relative to the support part as allowed with the screw sleeve being in its thread opening position.

In a development of the invention the foot part comprises at least two foot elements, and the support part comprises at least two associated screw sleeves, wherein the thread actuating mechanism is configured to elastically hold each screw sleeve in its thread closing position and to be user-operable for moving each screw sleeve from its thread closing position to its thread opening position. This arrangement turns out to be advantageous for many appliances in consideration of flexibility in height adjustment, ease of handling, and structural stability, such as for height adjustment of shower drain assemblies.

In a refinement of the invention the screw sleeve portions are arranged to be laterally movable relative to one another by a substantially pivotal movement around a pivot axis parallel to a thread axis of the associated screw thread connection or around a pivot axis orthogonal to the thread axis of the associated screw thread connection. Such embodiments of the invention establish the relative lateral movement of the screw sleeve portions by a pivotal movement which is easy to implement and reliable in function. The pivotal relative movement of the screw sleeve portions causes the screw thread connection to be disengaged and engaged. The associated pivot axis in these cases is parallel or orthogonal to the thread axis of the screw thread connection, while in alternative embodiments the pivot axis may have a slanted orientation relative to the thread axis.

The substantially pivotal movement and the pivot axis as mentioned herein should be understood to cover not just an exact pivotal movement around a fixed pivot axis, but to also cover any pivotal-like movement not limited to that around a stationary pivot axis but being a more general pivotal movement with the location of the pivot axis changing in space during the pivotal movement.

In a refinement of the invention at least a part of the screw sleeve thread is formed on the second screw sleeve portion, and the first screw sleeve portion is at least partially unthreaded. This includes, besides others, embodiments where the screw sleeve thread is formed on the second screw sleeve portion only, thus leaving the first screw sleeve portion completely unthreaded. Any unthreaded part of the screw sleeve may still contribute to receive the foot element and/or guide the foot element during its translational longitudinal movement relative to the screw sleeve when the screw sleeve is in its thread opening position.

In a refinement of the invention the thread actuating mechanism is configured to elastically hold the second screw sleeve portion in the thread closing position of the screw sleeve and to be user-operable for moving the second screw sleeve portion from the thread closing position of the screw sleeve to the thread opening position of the screw sleeve. In this case the thread actuating mechanism acts specifically on the second screw sleeve portion. This may in particular be helpful to move the inner thread of the screw sleeve out of engagement with the outer thread of the foot element, especially in cases where the inner thread is exclusively provided on the second screw sleeve portion.

In a refinement of the invention the axial gap extends continuously between a first, free axial end of the screw sleeve and an opposing second axial end of the screw sleeve or extends from the first, free axial end of the screw sleeve only along a part of the axial length of the screw sleeve so as to terminate at a distance from the second axial end. In the first case the axial gap separates the first and second screw sleeve portions along the whole axial length of the screw sleeve, whereas in the latter case the axial gap separates the first and second screw sleeve portions only along a part of the axial length of the screw sleeve. In the remaining axial part the screw sleeve may remain as a circumferentially closed or open sleeve part not divided into a plurality of sleeve portions separated in circumferential direction, said circumferentially undivided sleeve part being preferably unthreaded.

In a refinement of the invention the support part comprises a base body on which the support surface and the respective first screw sleeve portion are rigidly formed, and the thread actuating mechanism comprises at least one actuating member which is associated with the respective second sleeve portion, in particular arranged on the respective second sleeve portion, and which is elastically movably connected to the base body. This turns out to be a favorable arrangement of the laterally relatively movable screw sleeve portions and the associated thread actuating mechanism operated by the user to initiate this movement.

In a further refinement of the invention the actuating member comprises a one-hand user finger-operable push lever element or pull lever element. This turns out to be a favourable realization of the actuating member in terms of low manufacturing effort and high user comfort.

In a further refinement of the invention the actuating member comprises a rigid flap element elastically pivotably connected to the base body via a flap joint orthogonal to the thread axis. In such embodiments the flap joint defines a preferably stationary pivot axis orthogonal to the thread axis for the pivotal movement of the screw sleeve portions relative to one another. The rigid flap element, or some additional element connected thereto, may establish the user interface, i.e. the operating element which the user can push or pull with one or more of his fingers to manipulate the thread actuating mechanism.

In an alternative further refinement of the invention the actuating member comprises a strap element elastically pivotably connected to the base body via a strap joint parallel to the thread axis. In such embodiments the strap joint defines a pivot axis parallel to the thread axis for the pivotal relative movement of the screw sleeve portions via the actuating member. In this case the strap element may constitute the user interface of the thread actuating mechanism which can be grasped or pulled or pushed by the user to initiate the movement of the screw sleeve from its thread closing position to this thread opening position.

In a development of the invention the single foot element or at least one of a plurality of foot elements comprises a bolt-like portion on which the outer thread is formed, and a foot body rotatably connected to the bolt-like portion. The foot body can thus be rotated independent of the bolt-like portion carrying the outer thread. This allows to rotate the foot body to a desired position without influencing the height adjustment, and/or to rotate the bolt-like portion for height adjustment purposes without altering the position of the foot body. In particular this allows to rotate the bolt-like portion for height adjustment purposes even if the foot body has been fixed on an underlying structure, such as a floor. Alternatively, the foot body may be connected to the bolt-like portion in a rotationally fixed manner by a corresponding fixation or by forming the foot body and the bolt-like portion as one-piece constituents, if desired.

The drain assembly according to the invention comprises a drain, which may in particular be a shower drain, and the height adjustment device of the invention. The drain is configured to be arranged on a floor, such as the floor of a shower room, and can be adjusted in its height relative to the floor by the height adjustment device. To this end the drain is mounted on the support surface of the support part of the height adjustment device or is formed in one-piece with the support surface and/or the support part. The term floor is used herein to mean any underlying structure on which the drain should be placed.

So, the favorable effects and advantages of the height adjustment device of the invention are used to install the drain on or in a floor, e.g., of a shower room, in a manner which allows for easy and exact adjustment of the height of the drain in relation to the floor. For example, by using the height adjustment device of the invention the drain can be easily and comfortably height-adjusted such that it ends with its top surface flush with a surrounding floor surface, and/or such that a desired slope of the drain can be easily and exactly set for facilitating the discharge of collected water out of the drain.

The drain may have any desired shape and type as conventionally known. For example, in shower drain systems and similar sanitary systems the drain may be an elongated drain with a linear or curved or angled extension or may be a spot-like or point-like drain having a rectangular or circular or other desired shape.

Advantageous embodiments of the invention are illustrated in the drawings. These and further embodiments of the invention will be explained in more detail below. In the drawings:
- Fig. 1: is a perspective top view of a drain assembly having a drain and a height adjustment device for height adjustment of the drain relative to a floor in a room,
- Fig. 2: is a perspective partial bottom view of the drain assembly of Fig. 1,
- Fig. 3: is a perspective top view of the height adjustment device,
- Fig. 4: is side view of the height adjustment device,
- Fig. 5: is the view of Fig. 3 for a modified height adjustment device,
- Fig. 6: is a top view of the height adjustment device of Fig. 5,
- Fig. 7: is the view of Fig. 3 for another height adjustment device,
- Fig. 8: is the view of Fig. 6 for the height adjustment device of Fig. 7,
- Fig. 9: is the view of Fig. 3 for another height adjustment device,
- Fig. 10: is the view of Fig. 6 for the height adjustment device of Fig. 9,
- Fig. 11: is the view of Fig. 3 for another height adjustment device,
- Fig. 12: is the view of Fig. 6 for the height adjustment device of Fig. 11,
- Fig. 13: is the view of Fig. 4 for the height adjustment device of Fig. 11,
- Fig. 14: is the view of Fig. 3 for another height adjustment device in an intermediate state before final assembly for use,
- Fig. 15: is the view of Fig. 6 for the height adjustment device of Fig. 14 in the intermediate state before final assembly for use,
- Fig. 16: is the view of Fig. 2 with another drain assembly and height adjustment device,
- Fig. 17: is the view of Fig. 2 with another drain assembly and height adjustment device,
- Fig. 18: is the view of Fig. 2 with another drain assembly and height adjustment device,
- Fig. 19: is the view of Fig. 2 with another drain assembly and height adjustment device, and
- Fig. 20: is the view of Fig. 16 with foot elements removed from sleeves of the height adjustment device.

As illustrated in the figures, showing exemplary embodiments, the height adjustment device according to the invention comprises a support part 1 and a foot part 3. The support part 1 has a support surface 2. The foot part 3 has at least one foot element 4₁. The support surface 2 is height adjustably connected with the foot element 4₁ via a screw thread connection 5 which comprises an outer thread 6 formed on the foot element 4₁ and an inner thread 7 formed on a screw sleeve 8₁ of the support part 1, which screw sleeve 8₁ is associated with the corresponding foot element 4₁.

The screw sleeve 8₁ is configured to be laterally movable with its inner thread 7 relative to the outer thread 6 of the foot element 4₁ between a thread closing position and a thread opening position. In the figures, the screw sleeve 8₁ is shown in its thread closing position in which the outer thread 6 of the foot element 4₁ is in threading engagement with the inner thread 7 of the screw sleeve 8₁. In the thread opening position the threading engagement of the outer thread 6 of the foot element 4₁ with the inner thread 7 of the screw sleeve 8₁ is released so that the foot element 4₁ with its outer thread 6 can be translationally moved in axial, i.e. longitudinal, direction of the screw sleeve 8₁, i.e. the longitudinal or axial direction of the screw thread connection 5.

The screw sleeve 8₁ may be formed integrally, i.e. in one single piece, with the support part 1, like in the embodiments shown, or may be formed separately and mounted on the support part 1. The screw sleeve 8₁ receives at least a portion of the outer thread 6 of the foot element 4₁ and is provided with the cooperating inner thread 7 either on its complete inner sleeve surface or on a portion of its inner sleeve surface only.

The support part 1 comprises a thread actuating mechanism 10 which is configured to elastically hold the screw sleeve 8₁ in its thread closing position and to be user-operable for moving the screw sleeve 8₁ from its thread closing position to its thread opening position.

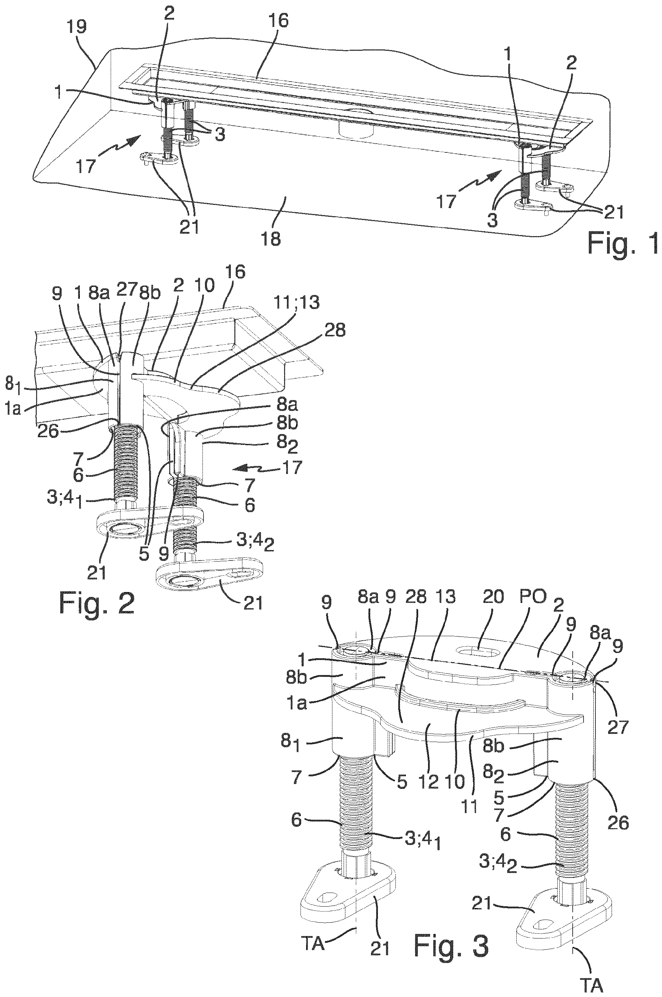

In corresponding embodiments, such as those according to figs. 1 to 13 and 16 to 20, the screw sleeve 8₁ is formed by at least a first and a second screw sleeve portion 8a, 8b separated by at least one axial gap 9 and arranged to be laterally movable relative to one another between the thread closing position and the thread opening position of the screw sleeve 8₁.

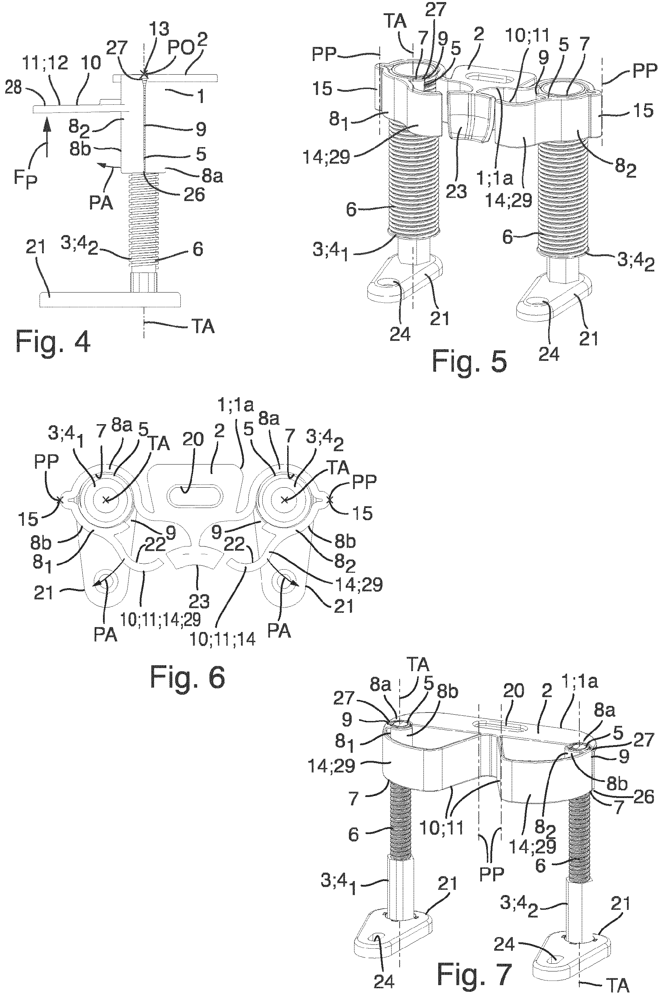

Specifically, in the embodiments of figs. 1 to 4, 7 to 10, and 16 to 20 the screw sleeve 8₁ is divided by two opposite axial gaps 9 into two sleeve halves forming the screw sleeve portions 8a, 8b, while in the embodiments of figs. 5, 6, and 19 there is only one gap 9 splitting the screw sleeve 8₁ into the two screw sleeve portions 8a, 8b which in this case remain connected along an axial hinge joint structure.

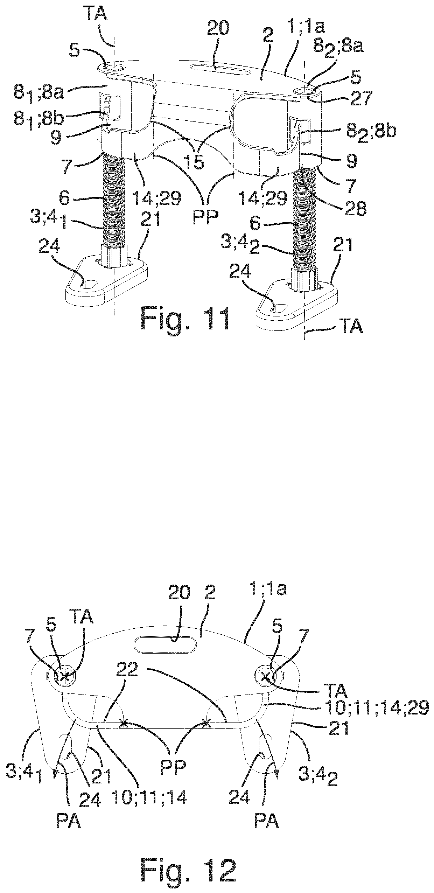

In the embodiment of figs. 11 to 13 two neighbouring axial gaps 9 are provided which divide the screw sleeve 8₁ into two separate first and second sleeve portions 8a, 8b, where the second screw sleeve portions 8b are formed to be quite narrow portions extending strip-like in the axial direction carrying the inner thread 7 of the respective screw sleeve 8₁ at their face end side.

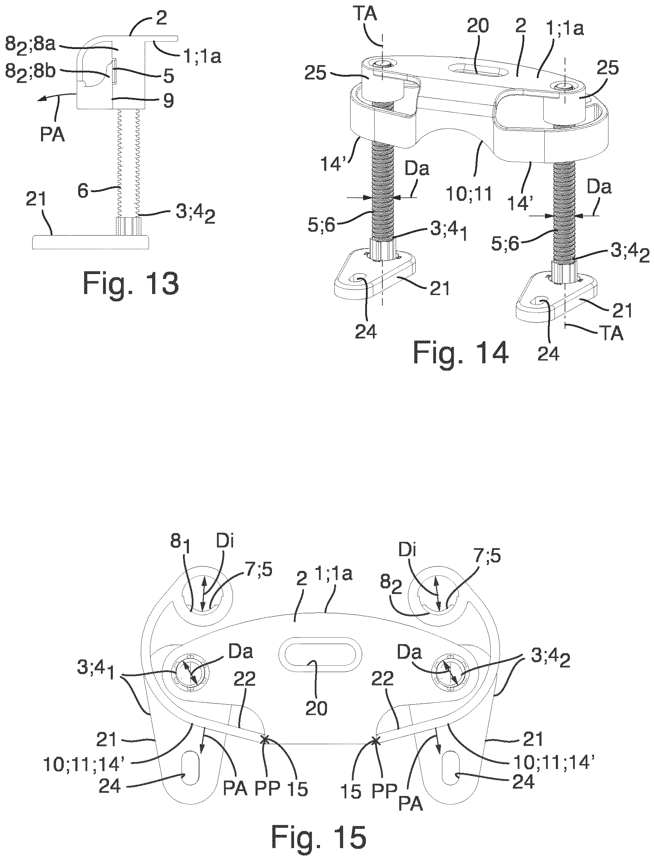

In corresponding embodiments, such as that of figs. 14 and 15, the screw sleeve 8₁ is formed with an inner diameter Di larger than an outer diameter Da of the outer thread 6 of the foot element 4₁. The difference between these diameters Di, Da is sufficiently large so that the inner thread 7 of the screw sleeve 8₁ can be brought out of engagement with the outer thread 6 of the foot element 4₁ by moving the screw sleeve 8₁ into the corresponding thread opening position. By allowing the screw sleeve 8₁ to move back to the thread closing position the inner thread 7 of the screw sleeve 8₁ comes again into engagement with the outer thread 6 of the foot element 4₁. In the embodiment of figs. 14 and 15 this is enabled by restricting the inner thread 7 of the screw sleeve 8₁ in circumferential direction to extend over only a part of the full 360° circumference, preferably over less than half the circumference, for example over one fourth to one half of the circumference. In the embodiment shown the inner thread 7 of the screw sleeve 8₁ extends over about one third of the circumference, as seen from fig. 15.

In corresponding embodiments, such as the embodiments shown, the thread actuating mechanism 10 is configured to be one-hand user finger-operable for moving the screw sleeve 8₁ from its thread closing position to its thread opening position. This allows the user to manipulate the thread actuating mechanism 10 by one or more fingers of one of his hands to bring the screw sleeve 8₁ to its thread opening position. The user may then use his other hand to move the foot element 4₁ translationally in the axial thread direction for coarse and quick height adjustment without having to rotate the foot element 4₁.

In advantageous embodiments, such as the embodiments shown, the foot part 3 comprises at least two foot elements 4₁, 4₂, and the support part 1 comprises at least two associated screw sleeves 8₁, 8₂. The thread actuating mechanism 10 is configured in this case to elastically hold each screw sleeve 8₁, 8₂ in its thread closing position and to be user-operable for moving each screw sleeve 8₁, 8₂ from its thread closing position to its thread opening position.

In favorable realizations the screw sleeve portions 8a, 8b are arranged to be laterally movable relative to one another by a substantially pivotal movement around a pivot axis PP parallel to a thread axis TA of the associated screw head connection 5. Figs. 5 to 13 and 19 show corresponding embodiments.

In other favorable realizations the screw sleeve portions 8a, 8b are arranged to be laterally movable relative to one another by a pivotal movement around a pivot axis PO orthogonal to the thread axis TA of the associated screw thread connection 5. Corresponding embodiments of this kind are shown in figs. 1 to 4, 16 to 18, and 20.

In corresponding embodiments at least a part of the screw sleeve thread 7 is formed on the second screw sleeve portion 8b, and the first screw sleeve portion 8a is at least partially unthreaded. This includes embodiments where the first screw sleeve portion 8a remains completely unthreaded and the second screw sleeve portion 8b is threaded on its complete axial extension or only on a part of its axial extension. The unthreaded part of the screw sleeve 8₁, 8₂ may serve to guide the respective foot element 4₁, 4₂ and in particular their bolt-like portion in its axial movement along the screw sleeve 8₁, 8₂. Further, providing the screw sleeve thread 7 only on a part of the first and/or the second screw sleeve portions 8a, 8b may facilitate to disengage the screw sleeve thread 7 from the foot element thread 6.

In corresponding realizations the thread actuating mechanism 10 is configured to elastically hold the second screw sleeve portion 8b in the thread closing position of the screw sleeve 8₁ and to be user-operable for moving the second screw sleeve portion 8b from the thread closing position of the screw sleeve 8₁ to the thread opening position of the screw sleeve 8₁. Corresponding embodiments of this kind are shown in figs. 1 to 13 and 16 to 20.

In advantageous realizations the axial gap 9 extends continuously between a first, free axial end 26 of the screw sleeve 8₁ and an opposing second axial end 27 of the screw sleeve 8₁. Corresponding embodiments of this kind are shown in figs. 1 to 13 and 19. In other advantageous realizations the axial gap 9 extends from the first, free axial end 26 of the screw sleeve 8₁ only along a part of the axial length of the screw sleeve 8₁ so as to terminate at a distance from the second axial end 27. Corresponding embodiments of this kind are shown in figs. 11 to 13, 16 to 18, and 20.

In advantageous embodiments, such as those shown in figs. 1 to 13 and 16 to 20, the support part 1 comprises a base body 1a on which the support surface 2 and the respective first screw sleeve portion 8a of each screw sleeve 8₁, 8₂ are rigidly formed. The thread actuating mechanism 10 comprises in these cases at least one actuating member 11 on which the respective second sleeve portion 8b of each screw sleeve 8₁, 8₂ is formed and which is elastically movably connected to the base body 1a.

In corresponding embodiments, such as the embodiments shown, the actuating member 11 comprises a one-hand user finger-operable push lever element 28 or pull lever element 29.

In favorable realizations, such as those shown in figs. 1 to 4, 16 to 18, and 20 the actuating member 11 of the screw actuating mechanism 10 comprises a rigid flap element 12 which is pivotably connected to the base body 1a in an elastic manner via a flap joint 13 orthogonal to the thread axis TA.

In other favorable realizations, such as the embodiments shown in figs. 5 to 13 and 19, the actuating member 11 of the thread actuating mechanism 10 comprises a strap element 14 which is pivotably connected to the base body 1a in an elastic manner via a strap joint 15 parallel to the thread axis TA.

In advantageous embodiments, such as the embodiments shown except figs. 5 and 16 to 20, the foot element 4₁ or at least one of the foot elements 4₁, 4₂, comprises a bolt-like portion on which the outer thread 6 is formed, and a foot body 21 rotatably connected to the bolt-like portion. In this case the foot body 21 can be rotated independently from the bold-like portion carrying the outer thread 6. Alternatively, the foot body 21 may be connected to the bolt-like portion in a rotationally fixed manner, such as in the embodiments of figs. 5 and 16 to 20, for example by using a screw connection or a plug-in connection with a polygonal cross-section of the plug-in engagement or a one-piece fabrication of both constituents.

Figs. 1, 2, and 16 to 20 illustrate embodiments of the drain assembly according to the invention. The drain assembly may in particular be a shower drain assembly and comprises a drain 16, such as a shower drain, which is formed as a drain body and is configured to be arranged on a floor, such as a floor 18 of a shower room 19 partly and schematically shown in fig. 1. The drain assembly further comprises a height adjustment device 17 according to the invention, where the drain 16 is mounted on the support surface 2 of the support part 1 of the height adjustment device 17. To this end the support part 1 may be provided with a mounting screw hole 20, as shown, through which a mounting screw, not shown, can be passed to fix the drain 16 on the support surface 2. Alternatively, the support surface 2 and/or the support part 1 of the height adjustment device 17 may be formed integrally, i.e. in one single piece, with the drain 16 or with another object which is intended to be height-adjustable arranged on an underlying structure.

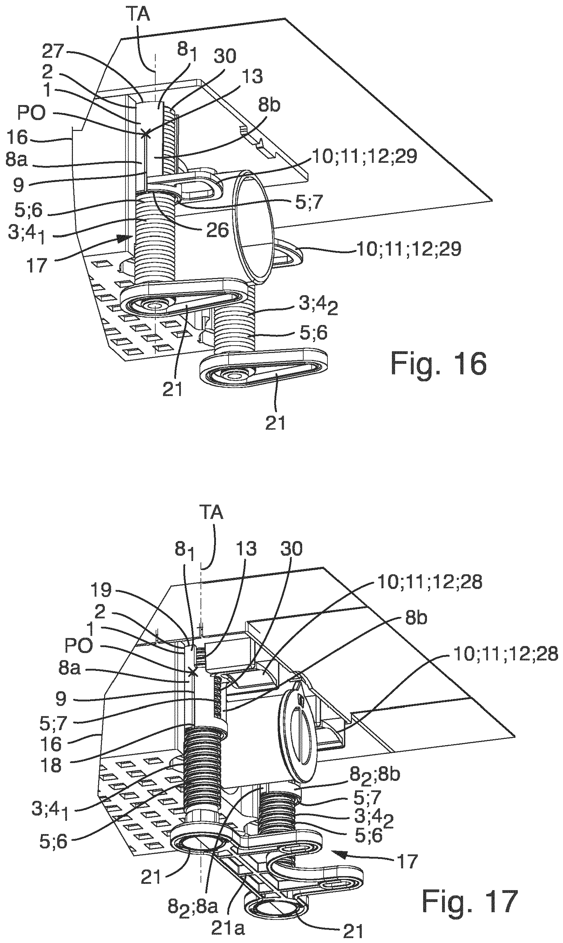

In the following, the various embodiments of the height adjustment device of the invention as shown in the figures are separately explained in some more detail. In all these embodiments shown the foot part 3 consists of two foot elements 4₁, 4₂ arranged in parallel to one another and at a suited lateral distance from one another. In alternative embodiments the foot part 3 consists of only one foot element or of more than two foot elements. Each foot element 4₁, 4₂ comprises the bolt-like portion on which the outer thread 6 is formed, and the foot body 21 connected to the bolt-like portion. Correspondingly, the support part 1 comprises two screw sleeves 8₁, 8₂ each associated with one of the foot elements 4₁, 4₂. Each foot body 21 may be provided with a mounting hole 24 for having it mounted on the floor 18 or other underlying structure on which the height adjustment device is arranged. In a preferred embodiment, the foot body 21 is connected to the bolt-like portion by a snap-hook connection for easy and cheap assembly and preferably such that the foot body 21 can rotate independent of the bolt-like portion. In the embodiment of fig. 17 the two foot bodies 21 are connected to one another by a bridging foot part 21a so that a one-piece foot structure is provided.

The height adjustment device as shown in figs. 1 to 4 comprises the rigid flap element 12 with a half-moon like shape on a front side and at a height level between an upper and a lower end of the screw sleeves 8₁, 8₂ and formed in one piece with their second screw sleeve portions 8b or fixedly attached thereto. The flap element 12 protrudes horizontally from a vertical wall of the base body 1a of the support part 1, and the support surface 2 horizontally extends with a semi-circular shape in the rear direction at a top end of the support part 1.

It may be noted here that the terms horizontal direction and vertical direction as well as front side and rear side and similar orientation-related terms are used herein just to refer to a usual orientation of the device when in use, while not excluding that the device in other appliances may be used in other orientations, as desired.

Each second screw sleeve portion 8b is completely separated from the associated first screw sleeve portion 8a by the two continuous axial gaps 9 which in this example are provided 180° offset from one another. This means that the axial gaps 9 divide the screw sleeves 8₁, 8₂ in two sleeve halves of semi-circular cross-section. The second sleeve portions 8b form side extensions of said vertical wall of the base body 1a, and this vertical wall is hingedly connected to the support surface 2 by the flap joint 13 which thus extends in the direction orthogonal to the thread direction TA and orthogonal to the front-to-rear direction. The first screw sleeve portions 8a are rigidly connected to the base body 1a, in particular by being formed integrally therewith. Due to this construction the thread actuating mechanism 10 can be operated by the user by a pushing force Fp on the flap element 12 from below, said pushing force Fp thus being orientated upwards, as shown in fig. 4. By pushing the flap element 12 upwards, the actuating member 11 and thus the thread actuating mechanism 10 is pivoted around the flap joint 13, forming the corresponding pivot axis PO. This moves each of the second screw sleeve portions 8b laterally away, in particular in the front and slightly upward direction, i.e. the left, upper direction as represented by pivot arrow PA in fig. 4, from the first screw sleeve portions 8a which remain stationary so that the inner thread 7 of the screw sleeves 8₁, 8₂ moves out of engagement with the outer thread 6 of the foot elements 4₁, 4₂. This establishes the movement of the screw sleeves 8₁, 8₂ to their thread opening position in which height adjustment can be accomplished by translationally moving each foot element 4₁, 4₂ in the thread axis TA direction, i.e. up and down in figs. 1 to 4.

Due to the elastic nature of the pivotable connection of the actuating member 11 to the stationary part of the base body 1a via the flap joint 13, the actuating member 11 and thus the thread actuating mechanism 10 automatically moves back from the thread opening position of the screw sleeves 8₁, 8₂ to the thread closing position, as shown, when the user releases the pushing force Fp on the flap element 12 so that the inner thread 7 of the screw sleeves 8₁, 8₂ returns to its threading engagement with the outer thread 6 of the foot elements 4₁, 4₂. In the thread closing position height adjustment can be accomplished by rotating each foot element 4₁, 4₂ relative to the support part 1.

The embodiments shown in figs. 5 to 20 are modifications of the height adjustment device shown in figs. 1 to 4 having mainly similar effects and advantages which need not be repeated. Therefore, primarily the differences are explained in the following.

The embodiments of figs. 5 to 13 and 19 respectively use one or two of the strap elements 14 which are pivotably connected to the base body 1a in an elastic manner via the strap joint 15 which runs parallel to the thread axis TA.

In the embodiment of figs. 5 and 6, two strap elements 14 are used, one for each of the two screw sleeves 8₁, 8₂. The respective strap element 14 in this example is pivotably connected at a side end with a side end of the corresponding second screw sleeve portion 8b and formed integrally therewith such that an axial hinge-like joint is formed. Therefore, the respective strap element 14 can be pivotably moved in a horizontal plane around the vertical pivot axis PP established by said hinge-like joint, as represented by the pivot arrows PA in fig. 6. The second screw sleeve portions 8b are respectively connected with the corresponding strap element 14, and the strap elements 14 terminate free at their opposite end such that a contact surface 22 is formed which can be contacted by the user with a finger to initiate the pivot movement of the strap elements 14. The thread actuating mechanism 10 in this example comprises a counter-surface 23 which the user can contact with another finger, such as his thumb. This facilitates the user to pull the strap elements 14 outwards in the front and side direction, i.e. the pivot direction represented by the pivot arrows PA in this embodiment.

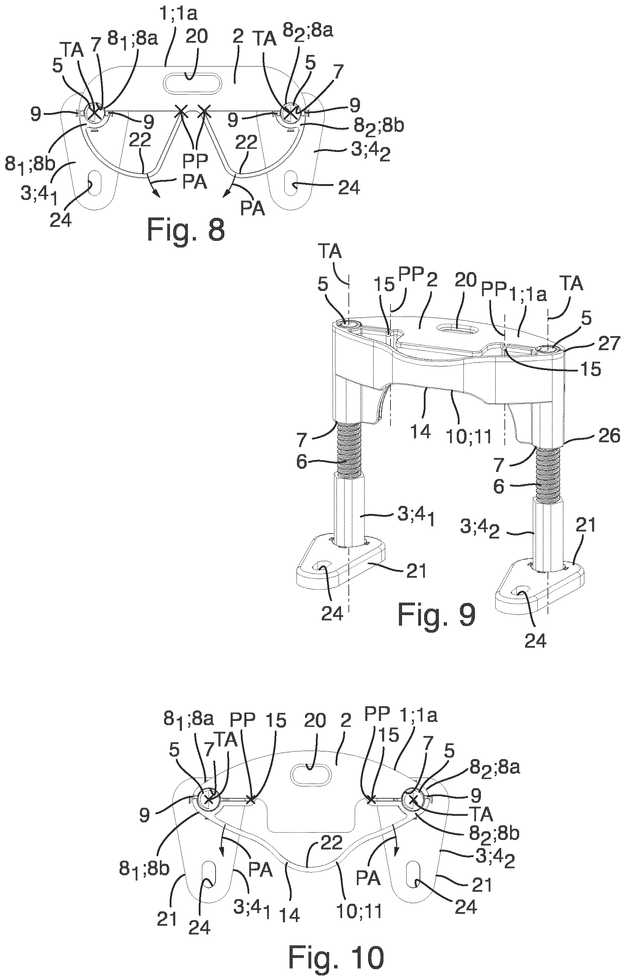

In the embodiment of figs. 7 and 8 the strap elements 14 are each with one end pivotably connected to the base body 1a at a central portion of the support part 1, while they carry the second screw sleeve portion 8b of the screw sleeve 8₁, 8₂ at their other, outer side end, respectively. The strap elements 14 in this example have a U-like or V-like shape, again offering the push contact surface 22 which the user can contact with his fingers to pivot the strap elements 14 such that the second sleeve portions 8b move away from their associated first sleeve portions 8a, as illustrated by the pivot arrows PA.

In the embodiment of figures 9 and 10 the actuating member 11 of the screw actuating mechanism 10 comprises a single strap element 14 carrying on its opposing ends the second screw sleeve portions 8b and providing in a central portion the push contact surface 22 which the user can contact with one or more fingers to pull the strap element 14 away from the base body 1a of the support part 1, i.e. in the front direction. This correspondingly moves the second screw sleeve portions 8b away from the first screw sleeve portions 8a which remain stationary as part of the base body 1a and thus away from the outer thread 6 of the foot elements 4₁, 4₂. In this case the movement of the strap element 14 and the second screw sleeve portions 8b is defined by a pivotal motion around the vertical pivot axis PP defined by a hinge-like joint through which the strap element 14 is hingedly connected at its both end portions to the base body 1a forming the strap joints 15 in this embodiment. Again, the pivotal movement of the strap element 14 and thus of the second screw sleeve portions 8b is illustrated by the pivot arrows PA in figure 10.

In the embodiment of figures 11 to 13 two strap elements 14 are provided which are pivotably connected at an inner end to the base part 1a to define the related vertical pivot axis PP and carry the second screw sleeve portions 8b at an outer end. In this case, as mentioned above, the second screw sleeve portions 8b are formed to be quite narrow in the circumferential direction forming axial strip-like sleeve portions carrying the inner thread 7 of the respective screw sleeve 8₁ 8₂ at their face end side. Similar to the embodiment of figures 7 and 8, the user can pull the strap elements 14 and thus the second screw sleeve portions 8b away from the base body 1a and the first screw sleeve portions 8a by contacting the corresponding pull contact surface 22 at the inner side of the strap elements 14. This moves the screw sleeves 8₁, 8₂ to their thread opening position in that the second screw sleeve portions 8b with their inner thread 7 are laterally moved away from a first screw sleeve portions 8a and thus from the outer thread 6 of the respective foot element 4₁, 4₂ received in the corresponding first screw sleeve portion 8a.

In this example the first screw sleeve portions 8a are formed to have a closed and unthreaded circumference at least in an upper and/or lower portion, while the strip-like second screw sleeve portions 8b with their inner thread 7 come into contact with the outer thread 6 of the respective foot element 4₁, 4₂ through a window-like part of the first screw sleeve portions 8a. The pivotal movement of the second screw sleeve portions 8b relative to the first screw sleeve portions 8a and the outer thread 6 of the foot elements 4₁, 4₂ is again illustrated by the pivot arrows PA in figure 12. The decoupling of the thread engagement may also be accomplished by pulling the strap element 14 via a central pulling force initiated by the user by correspondingly contacting the strap element 14 with his fingers at a central region between the two pull contact surfaces 22 and between the two vertical pivot axes PP shown in figure 12.

In the embodiment of figures 14 and 15 two strap elements 14' are provided similar to those of the embodiment of figures 11 to 13 in that they are hinged at an inner end via the strap joint 15 to the base body 1a thus establishing the pivot axis PP. In this embodiment, however, the screw sleeves 8₁, 8₂ are not divided by axial gaps into two screw sleeve portions but are integrally formed at the outer end of the respective strap element 14'. The foot elements 4₁, 4₂ are received with their bolt portion carrying the outer thread 6 in unthreaded receiving sleeves 25 formed on the base body 1a of the support part 1.

The bolt-like portions of the foot elements 4₁, 4₂ carrying the outer thread 6 can be passed through the corresponding screw sleeve 8₁, 8₂ via a translational movement without rotation, because the screw sleeve diameter Di is appropriately larger than the diameter Da of the outer thread 6 of the foot elements 4₁, 4₂. In this case the screw sleeves 8₁, 8₂ carry the inner thread 7 on only a portion of their circumference, as seen in figure 15. The strap elements 14' are elastically biased, where they are shown in figure 15 in their initial, unbiased position and shape after fabrication.

The strap elements 14' can be elastically deformed from this initial position to have the screw sleeves 8₁, 8₂ brought in axial alignment with the receiving sleeves 25 so that the foot elements 4₁, 4₂ can be passed therethrough with their bolt-like portion, i.e. their head part. The screw sleeves 8₁, 8₂ will then be elastically biased with their inner thread 7 against the outer thread 6 of the foot elements 4₁, 4₂ which defines the thread closing position for this embodiment, where height adjustment can be made through rotating the foot elements 4₁, 4₂. So, in this embodiment the actuating mechanism 10 sets each screw sleeve 8₁, 8₂ under elastic tension when the actuating mechanism 10 and thus the screw sleeves 8₁, 8₂ have been brought from their initial, unbiased fabrication position, as shown in figures 14 and 15, to their use position.

By pulling the strap elements 14' via contacting the contact surface 22 at their inner side with his fingers the user can release this elastic bias and move the screw sleeves 8₁, 8₂ with their inner thread 7 out of engagement with the outer thread 6 of the foot elements 4₁, 4₂. This again allows for translational axial movement of the foot elements 4₁, 4₂ relative to the support part 1 without needing rotational thread movement for height adjustment in particular in case of comparatively large height adjustments which would otherwise necessitate a lot of full turns of the thread connection 5.

Alternatively in this embodiment, the user can release this elastic bias and move the screw sleeves 8₁, 8₂ with their inner thread 7 out of engagement with the outer thread 6 of the foot elements 4₁, 4₂ by directly acting with his fingers on the screw sleeves 8₁, 8₂, from the back side, i.e. the top side of figure 15, with a pushing force directed in front direction, i.e. downwards in figure 15.

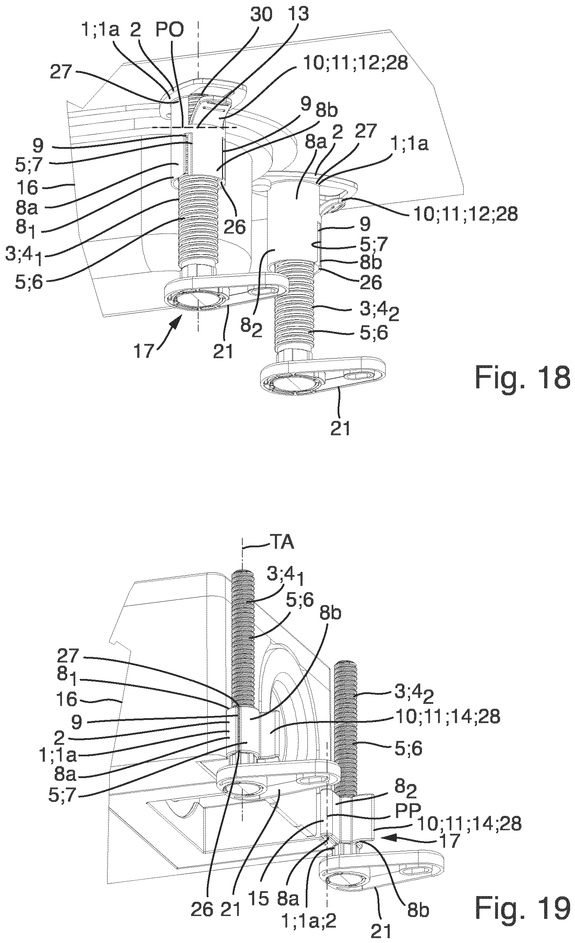

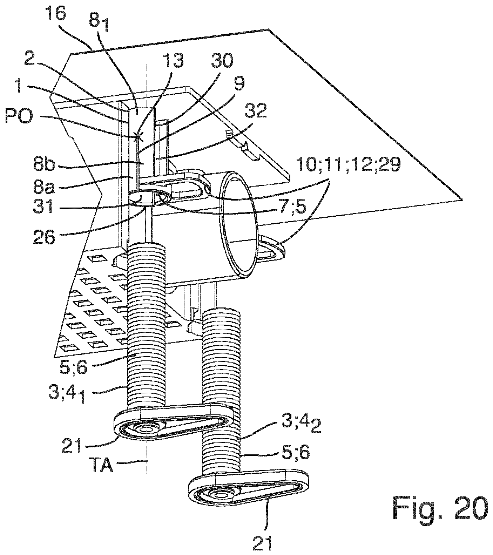

Figs. 16 to 18 and 20 show embodiments where the axial gap 9 extending from the free axial end 26 terminates at a distance from the second axial end 27. The termination region of the axial gap 9 is configured to form the flap joint 13 allowing the second screw sleeve portion 8b to be moved away from the first screw sleeve portion 8a by a substantially pivotal movement around the pivot axis PO orthogonal to the thread axis TA. That means the thread-carrying second screw sleeve portion 8b can be shifted away with its inner thread from the outer thread 6 of the associated foot element 4₁, 4₂ to the right side in figs. 16, 17, and 20 and to the front, right side in fig. 18. This pivotal movement of the second screw sleeve portion 8b is further facilitated by an axial slit 30 provided in the screw sleeve 8₁, 8₂ which extends from the second axial end 27 down to a level near the termination of the axial gap 9, such as in figs. 17 and 18, or beyond said termination point, as in figs. 16 and 20, while being circumferentially offset from the axial gap 9 and having a circumferential extension preferably substantially larger than that of the axial gap 9.

Preferably, in the embodiments of figs. 16 to 18 and 20, as well as in the embodiment of figs. 1 to 4, the inner thread may be formed on the second screw sleeve portion 8b only, while the first screw sleeve portion 8a may remain unthreaded. In particular, in advantageous embodiments the inner thread 7 of the screw sleeve 8₁, 8₂ may be formed on a lower axial end region of the second screw sleeve portion 8b only, while the remaining axial region of the second screw sleeve portion 8b may be left unthreaded.

This is best seen in fig. 20 which shows the embodiment of fig. 16 with the foot elements 4₁, 4₂ moved out of the screw sleeves sleeve 8₁, 8₂ in such realization where the first screw sleeve portion 8a remains completely unthreaded, see an unthreaded part 31 of the first screw sleeve portion 8a visible in fig. 20, and the second screw sleeve portion 8b is provided with the inner thread 7 on its lower axial end region only while being unthreaded on its remaining axial extension, see an unthreaded part 32 of the second screw sleeve portion 8b visible in fig. 20.

It is this lower axial end region of the second screw sleeve portion 8b which is predominantly moved away from the first screw sleeve portion 8a and from the outer thread 6 of the foot element 4₁, 4₂ in embodiments where the second screw sleeve portion 8b is pivoted around the pivot axis PO orthogonal to the thread axis TA and where this pivot axis PO is located at a level above the lower, free axial end 26 of the screw sleeve 8₁, 8₂, such as in the embodiments of figs. 1 to 4 and 16 to 18. Therefore, the inner thread 7 of the screw sleeve 8₁, 8₂ is reliably moved out of engagement with the outer thread 6 of the foot element 4₁, 4₂ when the user activates the thread actuating mechanism 10 to set the screw sleeve 8₁, 8₂ from its thread closing position to its thread opening position in these embodiments.

It is noted that also in the other embodiments using the pivotal movement of the second screw sleeve portion 8b away from the first screw sleeve portion 8a and from the foot element 4₁, 4₂ the inner thread 7 of the screw sleeve 8₁, 8₂ may be provided in such lower axial end region of the sleeve 8₁, 8₂ only and may optionally be provided on the second screw sleeve portion 8b only, either on the complete inner surface of the second screw sleeve portion 8b or only in a partial region thereof, e.g. in an axial partial region near the first, free axial end 26 of the screw sleeve 8₁, 8₂.

In the embodiment of fig. 16 the actuating member 11 is formed by a respective lug-shaped element used as the pull lever element 29. The user can pull these two pull lever elements 29 individually or simultaneously with one or two fingers of one of his hands to pivot the respective second screw sleeve portion 8b away from the first screw sleeve portion 8a and the foot element 4₁, 4₂.

In the embodiment of fig. 17 the actuating member 11 comprises the respective push lever element 28 in a configuration where the user can push this lever element 28 in fig. 17 upwards which causes the second screw sleeve portion 8b to pivot away from the first screw sleeve portion 8a and the foot element 4₁, 4₂ around the flap joint 13 which in this embodiment constitutes the pivot axis PO orthogonal to the thread axis TA.

In the embodiment of fig. 18 the actuating member 11 similarly comprises the respective push lever element 28 which in this configuration is formed as the flap element 12 protruding in this example radially outwards and axially upwards from the region forming the flap joint 13. In this case the user can activate the thread actuating mechanism 10 to set the screw sleeve 8₁, 8₂ from its thread closing position to its thread opening position by pushing this lever element 28 in fig. 18 upwards so that by the resulting bending effect of the elastic sleeve material, similar to what is described above for those embodiments which use the same effect, the second screw sleeve portion 8b pivots away in particular with its lower axial end region from the first screw sleeve portion 8a and the foot element 4₁, 4₂.

While e.g. in the embodiments of figs. 1, 2, and 16 to 18 the respective screw sleeve 8₁, 8₂ is connected with its upper, second axial end 27 to the support part 1 or its base body 1a, in the embodiment of fig. 19 the respective screw sleeve 8₁, 8₂ is connected to the support part 1 or base body 1a with a circumferential screw region. Each foot element 4₁, 4₂ can thus extend through the complete axial length of the screw sleeve 8₁, 8₂ and protrude upwards beyond and out of the screw sleeve 8₁, 8₂. The continuous axial slit 9 enables in this embodiment the second screw sleeve portion 8b to be pivoted away from the first screw sleeve portion 8a connected to the support part 1 around the pivot axis PP parallel to the thread axis TA.

The actuating member 11 in this case comprises the finger-operable push lever element 28 in the configuration of the strap element 14. To this end the strap element 14 is formed on the second screw sleeve portion 8b and in this way is elastically pivotably connected to the support part 1 via the strap joint 15 parallel to the thread axis TA. In other words, the user may push the two push lever elements 28 in a direction towards one another, i.e. to the right and left in fig. 19, respectively, with two fingers of one hand to pivot the two second screw sleeve portions 8b simultaneously away from the first screw sleeve portions 8a and the foot elements 4₁, 4₂.

It goes without saying that the user can accomplish the height adjustment by operating the thread actuating mechanism 10 in the respective embodiments of figs. 16 to 19 in practically the same way utilising the same effects and functions as explained above with respect to similar ones of the embodiments of fig. 1 to 15, so this needs no repeated explanation here.

The height adjustment device of the invention allows for a favourably easy and comfortable mounting procedure of a drain of any kind on a floor, i.e. any underlying structure, as described in the following with reference to the embodiments shown in the drawings.

First, the height adjustment device 17 may be mounted on the drain 16. Then the drain 16 with the height adjustment device 17 is put in place on the floor 19. After that each foot element 4₁, 4₂ is fixed to the floor 19, preferably with its foot body 21, for example using a screw connection.

Now, coarse, rapid height adjustment can be made by setting each screw sleeve 8₁, 8₂ to its thread opening position and axially moving each screw sleeve 8₁, 8₂ relative to the foot element 4₁, 4₂. To set each screw sleeve 8₁, 8₂ to its thread opening position the user operates the thread actuating mechanism 10, preferably by one or more of his fingers, with an operating force which in the embodiments of fig. 1 to 4, 17 and 18 acts in a substantially vertical direction, i.e. substantially upwards or downwards in these figures, and in the embodiments of figs. 5 to 16, 19, and 20 acts in a substantially horizontal direction, i.e. substantially to the right or left or to the front or rear in these figures.

Finally, fine height adjustment can be made by setting each screw sleeve 8₁, 8₂ to its thread closing position and rotating the outer thread 6 of each foot element 4₁, 4₂ relative to the inner thread 7 of the corresponding sleeve 8₁, 8₂.

If desired, the height adjusted drain 16 may then be finally fixed to the floor 19 by filling a space between the floor 19 and the drain 16 with a corresponding floor pavement. The drain 16 will then remain fixed in its position relative to the floor 19 and the height adjustment device 17 will be out of use and optionally embedded in the floor pavement.

As apparent from the embodiments shown and the other embodiments explained above, the invention provides an advantageous height adjustment device and drain assembly which have improvements over the prior art in particular concerning low manufacturing and in particular installation effort, optimized handling, and high functional reliability.

**In** particular the height adjustment device allows for quick, coarse height adjustment even with comparatively large height changes to be made by an axial translational movement of the foot element with the screw sleeve in its thread opening position as well as for fine height adjustment by a rotational thread movement of the foot element with the screw sleeve in its thread closing position.

## Claims

1. Height adjustment device, preferably for height adjustment of a drain assembly, comprising
- a support part (1) comprising a support surface (2), and
- a foot part (3) comprising at least one foot element (4₁),
- wherein the support surface (2) is height adjustably connected with the foot element (4₁) via a screw thread connection (5) comprising an outer thread (6) formed on the foot element (4₁) and an inner thread (7) formed on an associated screw sleeve (8₁) of the support part (1),
**characterized in that**
- the screw sleeve (8₁) is configured to be laterally movable with its inner thread (7) relative to the outer thread (6) of the foot element (4₁) between a thread closing position and a thread opening position, and
- the support part (1) comprises a thread actuating mechanism (10) which is configured to elastically hold the screw sleeve (8₁) in its thread closing position and to be user-operable for moving the screw sleeve (8₁) from its thread closing position to its thread opening position.

2. Height adjustment device according to claim 1, further **characterized in that**
- the screw sleeve (8₁) is formed by at least a first and a second screw sleeve portion (8a, 8b) separated by at least one axial gap (9) and arranged to be laterally movable relative to one another between the thread closing position and the thread opening position of the screw sleeve (8₁), and/or
- the screw sleeve (8₁) is formed with an inner diameter (Di) larger than an outer diameter (Da) of the outer thread (6) of the foot element (4₁).

3. Height adjustment device according to claim 1 or 2, further **characterized in that** the thread actuating mechanism (10) is configured to be one-hand user finger-operable for moving the screw sleeve (8₁) from its thread closing position to its thread opening position.

4. Height adjustment device according to any one of claims 1 to 3, further **characterized in that** the foot part (3) comprises at least two foot elements (4₁, 4₂), and the support part (1) comprises at least two associated screw sleeves (8₁, 8₂), wherein the thread actuating mechanism (10) is configured to elastically hold each screw sleeve (8₁, 8₂) in its thread closing position and to be user-operable for moving each screw sleeve (8₁, 8₂) from its thread closing position to its thread opening position.

5. Height adjustment device according to any one of claims 2 to 4, further **characterized in that** the screw sleeve portions (8a, 8b) are arranged to be laterally movable relative to one another by a substantially pivotal movement around a pivot axis (PP) parallel to a thread axis (TA) of the associated screw thread connection (5) or around a pivot axis (PO) orthogonal to the thread axis (TA) of the associated screw thread connection (5).

6. Height adjustment device according to any one of claims 2 to 5, further **characterized in that** at least a part of the screw sleeve thread (7) is formed on the second screw sleeve portion (8b), and the first screw sleeve portion (8a) is at least partially unthreaded.

7. Height adjustment device according to any one of claims 2 to 6, further **characterized in that** the thread actuating mechanism (10) is configured to elastically hold the second screw sleeve portion (8b) in the thread closing position of the screw sleeve (8₁) and to be user-operable for moving the second screw sleeve portion (8b) from the thread closing position of the screw sleeve (8₁) to the thread opening position of the screw sleeve (8₁).

8. Height adjustment device according to any one of claims 2 to 7, further **characterized in that** the axial gap (9) extends continuously between a first, free axial end (26) of the screw sleeve (8₁) and an opposing second axial end (27) of the screw sleeve (8₁) or extends from the first, free axial end (18) of the screw sleeve (8₁) only along a part of the axial length of the screw sleeve (8₁) so as to terminate at a distance from the second axial end (19).

9. Height adjustment device according to any one of claims 2 to 8, further **characterized in that** the support part (1) comprises a base body (1a) on which the support surface (2) and the respective first screw sleeve portion (8a) are rigidly formed, and the thread actuating mechanism (10) comprises at least one actuating member (11) on which the respective second screw sleeve portion (8b) is formed and which is elastically movably connected to the base body (1a).

10. Height adjustment device according to claim 9, further **characterized in that** the actuating member (11) comprises a one-hand user finger-operable push lever element (28) or pull lever element (29).

11. Height adjustment device according to claim 9 or 10, further **characterized in that** the actuating member (11) comprises a rigid flap element (12) elastically pivotably connected to the base body (1a) via a flap joint (13) orthogonal to the thread axis (TA).

12. Height adjustment device according to claim 8, further **characterized in that** the actuating member (11) comprises a strap element (14) elastically pivotably connected to the base body (1a) via a strap joint (15) parallel to the thread axis (TA).

13. Height adjustment device according to any one of claims 1 to 12, further **characterized in that** the foot element (4₁) comprises a bolt-like portion on which the outer thread (6) is formed, and a foot body (21) rotatably connected to the bolt-like portion.

14. Drain assembly, preferably shower drain assembly, comprising a drain (16), preferably a shower drain, configured to be arranged on a floor, and a height adjustment device (17) according to any one of claims 1 to 13, wherein the drain (16) is mounted on the support surface (2) of the support part (1) of the height adjustment device (17) or formed in one-piece with the support surface (2) and/or with the support part (1).
